# EUROPÄISCHE PATENTSCHRIFT

(11) **EP 2 684 634 B1**
(45) Veröffentlichungstag und Bekanntmachung des Hinweises auf die Patenterteilung: **12.02.2020**
(21) Anmeldenummer: 12175565.6
(22) Anmeldetag: 09.07.2012
(51) Int. Cl.: B23K 9/073, B23K 9/095, B23K 9/173, B23K 9/09

(54) **Wechselstrom-Metallschutzgas-Schweißverfahren mit kontinuierlich zugeführtem Schweißdraht**
AC metal protective gas welding method with continually fed welding wire
Procédé de soudure à courant alternatif avec gaz protecteur du métal et fil en acier de soudage alimenté en continu

(43) Veröffentlichungstag der Anmeldung: 15.01.2014
(73) Patentinhaber: Cloos Innovations-GmbH, 35745 Herborn (DE)
(72) Erfinder: Warmbier, Andreas, 35708 Haiger (DE); Fey, Björn, 35708 Haiger (DE); Wege, Markus, 35232 Dautphetal-Allendorf (DE); Schmidt, Klaus-Peter, 57584 Scheuerfeld (DE); Wiegand, Christof, 57072 Siegen (DE); Paul, Christoph, 35756 Mittenaar (DE)
(74) Vertreter: Lippert Stachow Patentanwälte Rechtsanwälte

(56) Entgegenhaltungen:
- EP-A1- 2 431 119
- EP-A2- 0 586 325
- DE-U1- 20 114 660
- FR-A- 1 548 434
- JP-A- 59 179 269

## Beschreibung

Die Erfindung betrifft ein Wechselstrom-Metallschutzgas-Schweißverfahren mit kontinuierlich zugeführtem Schweißdraht und vorgegebenem Schweißzyklus, bei welchem die Polarität zwischen Schweißdraht und Werkstück wechselt und eine Wiederzündeinrichtung zur Erzeugung einer Zündhilfsspannung zur Unterstützung des Wiederzündens des unter Schutzgasabdeckung brennenden Lichtbogens nach einem Polaritätswechsel unterstützt, wobei das Vorliegen eines Lichtbogens oder eines Kurzschlusses überwacht wird.

Ein solches Schweißverfahren ist beispielsweise im Gebrauchsmuster DE 201 14 660 U1 offenbart. Bei einem solchen herkömmlichen Schweißverfahren ist es von entscheidender Bedeutung, auch unter schwierigen Bedingungen einen stabilen Schweißprozess bereitzustellen und auf eventuelle Prozessunterbrechungen oder -störungen sehr schnell zu reagieren um eine gleichförmige Tropfenablösung zur Gestaltung einer gleichmäßigen Schweißnaht aufrecht zu erhalten.

Ein herkömmliche Verfahren weist üblicherweise einen Schweißzyklus auf mit wenigstens einem positiven Zyklusabschnitt mit mehreren, aufeinander folgenden Prozessphasen, bei welchen die Drahtelektrode positiv gepolt ist und die eine Pulsphase aufweist, bei welcher es durch die bekannten Pinchkräfte zum Abschnüren eines Tropfens flüssigen Metalls und zum Ablösen des Tropfens vom freien Drahtende sowie zum Übergang und Eintauchen des Tropfens in das Schmelzbad des Werkstückes kommt. Bei einem nachfolgenden negativen Zyklusabschnitt, bei welchem die Drahtelektrode relativ zum Werkstück negativ ist, wird im Gegensatz zum vorhergehenden positiven Zyklusabschnitt mehr Leistung im Werkstück und dementsprechend weniger Leistung im Draht freigesetzt. Der gesamte Vorgang ist höchst kompliziert, sodass ein Wiederzünden des Lichtbogens nach einem Polaritätswechsel nicht in jedem Fall, insbesondere nicht in jedem Fall bei einem Polaritätswechsel von negativ zu im Vergleich zum Werkstück positiv gepolten Schweißdraht trotz Unterstützung durch eine Wiederzündeinrichtung sichergestellt werden kann.

Eine solche Situation des Nichtwiederzündens des Lichtbogens bei einem Polaritätswechsel ist besonders kritisch im Hinblick auf die Anforderungen an die Schweißnaht, welche möglichst homogen erfolgen muss. Dadurch, dass der Materialtransport von der abschmelzenden Drahtelektrode durch das Nichtwiederzünden des Lichtbogens unter Umständen über mehrere Schweißzyklen unterbrochen ist, ergeben sich Nahtunterbrechungen, die unter Umständen dazu führen können, dass das betreffende Bauteil Ausschussware darstellt. Dabei kann eine Kommutierung der Polarität in einer Tropfenkurzschlussphase nicht in jedem Fall eine Lösung der Problematik darstellen, da bei den damit verbundenen Kurzlichtbogenprozessen der Polaritätswechsel bzw. die Frequenzen nicht mehr frei steuerbar sind. Darüber hinaus leidet die Nahtqualität daran, dass der Lichtbogen ausgehend von einem Kurzschluss erzeugt wird, was Spritzer begünstigt.

Die Offenlegungsschrift EP 2 431 119 A1 betrifft ein Wechselstrom-Schweißverfahren mit abschmelzender oder nichtabschmelzender Elektrode, und mit vorgegebenem Schweißzyklus bei welchem die Polarität zwischen Elektrode und Werkstück wechselt und das Vorliegen eines Lichtbogens oder eines Kurzschlusses überwacht wird, wobei die Schweißzyklusfrequenz erhöht und die Polarität hin- und hergeschaltet wird, wenn eine Unterbrechung des Lichtbogens auftritt und ausgehend vom Erlöschen des Lichtbogens bei einem Polaritätswechsel von negativ gepolter Schweißelektrode zu positiv gepolter Schweißelektrode die Schweißzyklusfrequenz wieder erniedrigt wird, wenn ein Lichtbogen bei einem Polaritätswechsel von positiv gepolter Schweißelektrode zu negativ gepolter Schweißelektrode zündet. Die Offenlegungsschrift EP 0 586 325 A2 betrifft ein Verfahren zum Wolfram-Inert-Gasschweißen mit alternierendem Schweißstrom, wobei eine ansteuerbare Wiederzündeinrichtung das Wiederzünden des Lichtbogens mit einem Zündimpuls unterstützt bei einem Polaritätswechsel von negativ gepolter Schweißelektrode zu positiv gepolter Schweißelektrode.

Der Erfindung liegt die Aufgabe zugrunde, die obenstehend beschriebenen Nachteile von herkömmlichen Wechselstrom-Metallschutzgas-Schweißverfahren mit kontinuierlich zugeführtem Schweißdraht zumindest teilweise zu beheben. Überraschenderweise löst die vorliegende Erfindung verfahrensseitig dieses Problem schon mit einem erfindungsgemäßen Schweißverfahren mit den Merkmalen von Anspruch 1. Das erfindungsgemäße Wechselstrom-Metallschutzgas-Schweißverfahren zeichnet sich dadurch aus, dass nach dem Erkennen des Nichtwiederzündens des Lichtbogens bei einem Polaritätswechsel von relativ zum Werkstück negativ gepoltem Schweißdraht zu positiv gepoltem Schweißdraht der vorgegebene Schweißzyklus unterbrochen oder abgebrochen wird und die Polarität der Drahtelektrode solange hin und her geschaltet wird, bis der Lichtbogen wieder bei einem Polaritätswechsel von negativ gepoltem Schweißdraht zu positiv gepoltem Schweißdraht zündet.

Das erfindungsgemäße Verfahren beruht auf der überraschenden Erkenntnis, dass mit einem insbesondere schnellen Hin- und Herschalten der Polarität das Wiederzünden bei einem Polaritätswechsel von negativ gepoltem Schweißdraht zu positiv gepoltem Schweißdraht erleichtert wird bzw. sich die Wahrscheinlichkeit für das Wiederzünden erhöht, ohne dass immer auf die Einstellung einer Tropfenkurzschlussphase gewartet werden muss, welche sich aufgrund des kontinuierlich zugeführten Schweißdraht beim Nichtwiederzünden einstellt mit den damit verbundenen obenstehend beschriebenen Nachteilen bei der Auflösung des Kurzschlusses.

Stattdessen kann durch das erfindungsgemäße Verfahren vergleichsweise schnell wieder ein Lichtbogen bei einem Polaritätswechsel von negativ gepoltem Schweißdraht zu positiv gepoltem Schweißdraht stabil gezündet und ein vorgegebener Schweißzyklus fortgesetzt werden, ohne dass sich die gesamte Energiebilanz innerhalb des unterbrochenen Schweißzyklus stark verändert. Damit besteht bei der Durchführung des erfindungsgemäßen Verfahrens eine hohe Wahrscheinlichkeit, dass der nächste Tropfen trotz der Störung vom Draht sauber abgelöst wird und letztlich der gesamte Schweißprozess im Wesentlichen ungestört fortgeführt werden kann, wodurch die Nahtqualität nicht vermindert ist.

Das erfindungsgemäße Wechselstrom-Metallschutzgas-Schweißverfahren kann insbesondere für reine Wechselstrom-Metallinertgas (MIG) / Metallaktivgas (MAG)- Schweißprozesse eingesetzt werden. Dabei sind jedoch die unterschiedlichsten Modulationsformen durchführbar. Beispielsweise kann für eine bestimmte Anzahl von Schweißzyklen oder Perioden bzw. für eine bestimmte Zeitdauer das erfindungsgemäße Verfahren ablaufen. Danach kann in einen anderen Schweißprozess wiederum für eine bestimmte Zeitdauer oder eine bestimmte Anzahl von Schweißzyklen gewechselt und anschließend wiederum das erfindungsgemäße Schweißverfahren durchgeführt werden. Insofern kann in einem komplexen Schweißverfahren zwischen dem erfindungsgemäßen Verfahren und einem oder mehreren weiteren Prozessen hin und her geschaltet werden.

Weitere erfindungsgemäße Merkmale sind in der nachfolgenden allgemeinen und in der speziellen Beschreibung sowie in den Unteransprüchen angegeben.

Zweckmäßigerweise wird nach dem Erkennen des Nichtwiederzündens des Lichtbogens das angegebene Hin- und Herschalten der Polarität zwischen Schweißdraht und Werkstück schnellstmöglich, durchgeführt, um innerhalb von kürzester Zeit eine maximale Anzahl von Wiederzündversuchen bei einem Polaritätswechsel von negativ gepoltem Schweißdraht zu positiv gepoltem Schweißdraht zu erreichen. Die Zeitkonstanten für eine Kommutierung der Polarität sind wesentlich durch die ohmschen, kapazitiven bzw. induktiven Eigenschaften des realen Schweißprozesses festgelegt, die teilweise durch den Lichtbogenprozess selbst, jedoch insbesondere durch das Kabelnetzwerk bestimmt sind. Insofern ist es physikalisch nicht möglich, eine unverzögerte Umpolung der Stromflussrichtung durchzuführen. Je nach Schweißvorrichtung kann die Zeitkonstante des Schweißstromkreises im Bereich von etwa 100 - 500 psec liegen, wobei dieser Wert stark von der jeweiligen Kabelverlegung abhängt. Vorzugsweise wird insofern das Hin- und Herschalten der Polarität so durchgeführt, dass die Wechselzeiten im Wesentlichen, insbesondere allein, durch die beschriebenen elektrischen Gegebenheiten des Schweißstromkreises bestimmt sind. Dagegen wird vorzugsweise eine weitere Verzögerung, beispielsweise durch das bewusste Einschieben einer bestimmten Prozessphase in den Kommutierungsvorgang vermieden, um das Wiedereinführen des Schweißvorgangs in einen vorgegebenen Schweißzyklus nicht weiter zu verzögern.

Zweckmäßigerweise wird beim Hin- und Herschalten der Polarität die Wiederzündeinrichtung aktiviert zum Unterstützen der Zündung eines Lichtbogens, und zwar bei dem Polaritätswechsel von negativ gepoltem Schweißdraht zu positiv gepoltem Schweißdraht. Das Wiederzünden bei einem Polaritätswechsel von positiver Drahtelektrode zu negativer Drahtelektrode ist bei einem ungestörten Prozess wahrscheinlicher als bei einem Polaritätswechsel von negativ gepoltem Schweißdraht zu positiv gepoltem Schweißdraht, da im ersten Fall in der vorhergehenden Phase besonders viel Energie in der Drahtelektrodenspitze umgesetzt wurde, sodass bei dem nachfolgenden Polaritätswechsel eine ausreichende Anzahl von Elektronen aus der Drahtelektrode austreten kann. Da jedoch durch das Nichtzünden des Lichtbogens bei positiv gepoltem Draht keine Energie an den Draht abgegeben werden konnte, ist auch das Wiederzünden des Lichtbogens in der nachfolgenden Phase erschwert, bei welchem die Polarität von positiv gepoltem Draht zu negativ gepoltem Draht wechselt.

Zweckmäßigerweise umfasst das erfindungsgemäße Wechselstrom-MetallSchutzgas-Schweißverfahren einen Schweißzyklus, umfas send wenigstens einen positiven Zyklusabschnitt mit mehreren, aufeinanderfolgenden Prozessphasen, bei welchen die Drahtelektrode relativ zum Werkstück positiv gepolt ist, sowie einen sich an dem positiven Zyklusabschnitt nach einem Polaritätswechsel anschließenden negativen Zyklusabschnitt mit zumindest einer Prozessphase, bei welcher die Drahtelektrode negativ gepolt ist. Diese Prozessphasen innerhalb eines Zyklusabschnittes können sich insbesondere im Hinblick auf die Steuerung oder Regelung eines Schweißparameters wie des Schweißstromes oder der Schweißspannung bzw. eines bestimmten Wertes derselben unterscheiden. Dabei kann z.B. je nach Phase auf den Schweißstrom oder die Schweißspannung geregelt werden.

Zweckmäßigerweise umfasst ein positiver Zyklusabschnitt einen Polwechsel zu einer positiv gepolten Drahtelektrode, wobei der Schweißstrom bzw. die Schweißspannung leicht erhöht ist, um das Wiederzünden des Lichtbogens zu erleichtern. Daran kann sich eine weitere Phase anschließen, bei welchem der Lichtbogen weiter stabilisiert wird und die Schweißspannung bzw. der Schweißstrom zur vorhergehenden Phase leicht reduziert gehalten wird. Zweckmäßigerweise kann sich daran eine Pulsphase anschließen mit einer sehr hohen Stromanstiegsgeschwindigkeit, sodass es aufgrund der Pinchkräfte zum Abschnüren eines Tropfen flüssigen Metalls an der Drahtelektrode und zum Ablösen des Tropfens vom freien Drahtende sowie zum Eintauchen des Tropfens in das Schmelzbad des Werkstückes kommt. An diese Prozessphase des positiven Zyklusabschnittes kann sich eine Phase mit niedrigem Strom anschließen, was zum Anschmelzen flüssigen Metalls am freien Drahtende führt, womit in einer vorteilhaften Ausführungsform der positive Zyklusabschnitt eines vorbestimmten Schweißzyklus beendet ist. Danach kann sich zweckmäßigerweise ein Polaritätswechsel anschließen mit einer Phase mit erhöhter Schweißspannung bzw. Schweißstrom, um das Wiederzünden des Lichtbogens bei negativ gepolter Drahtelektrode zu erleichtern. Zur weiteren Stabilisierung des Lichtbogens kann sich an diese Phase eine weitere Phase des negativen Zyklusabschnittes anschließen, bei welchem Schweißspannung und Schweißstrom erniedrigt sind im Vergleich zur vorhergehenden Phase. Bei dem erfindungsgemäßen Schweißverfahren können eine beliebige Anzahl der beschriebenen, vorteilhaften Schweißperioden, umfassend den angegebenen positiven Zyklusabschnitt sowie den angegebenen negativen Zyklusabschnitt aufeinanderfolgen. Es versteht sich, dass der angegebene Schweißzyklus je nach spezifischen Anforderungen der jeweiligen Schweißaufgabe entsprechend abgeändert werden kann. Beispielsweise können weitere Prozessphasen im positiven Zyklusabschnitt oder auch im negativen Zyklusabschnitt hinzugefügt oder entfernt werden oder auch ein Schweißzyklus mehrere positive und negative Zyklusabschnitte umfassen.

Ergibt eine Überwachung des Schweißprozesses eine Unregelmä-ßigkeit, beispielsweise durch das Erkennen des Nichtwiederzündens des Lichtbogens bei positiver Drahtelektrode, kann in den jeweiligen Schweißzyklus erfindungsgemäß eingegriffen werden, um sicherzustellen, dass der vorgegebene Schweißzyklus möglichst schnell wieder abläuft, d.h. ohne wesentliche zeitliche Unterbrechung. Zweckmäßigerweise wird aus diesem Grunde nach dem Erkennen des Nichtwiederzündens des Lichtbogens bei einem Polaritätswechsel von negativ gepoltem Schweißdraht relativ zum Werkstück zu positiv gepoltem Schweißdraht der aktuelle positive Zyklusabschnitt abgebrochen und eine Prozessphase eingefügt, in welcher ein Polaritätswechsel von positiv gepoltem Schweißdraht zu negativ gepoltem Schweißdraht durchgeführt wird und daran anschließend die Polarität des Schweißdrahtes wiederum gewechselt. Vorteilhafterweise wird dabei beim Polaritätswechsel von positiv gepoltem Schweißdraht zu negativ gepoltem Schweißdraht kein vollständiger vorbestimmter Zyklusabschnitt durchfahren, sondern allein der Polaritätswechsel unter Aktivierung der Wiederzündeinrichtung, um den Lichtbogen bei negativ gepoltem Schweißdraht zu unterstützen. Nachdem daran anschließend die Polarität des Schweißdrahtes wiederum nach Plus gewechselt hat, vorzugsweise auch hier unter Aktivierung der Wiederzündhilfe, wird nachfolgend überprüft, ob ein Lichtbogen bei positiv gepolter Drahtelektrode gezündet hat. Ist dies der Fall, kann zweckmäßigerweise ein vorgegebener, beispielsweise der obenstehend beschriebene positive Zyklusabschnitt gestartet werden, sodass danach der Schweißprozess wieder ungestört ablaufen kann.

Zweckmäßigerweise kann die Wiederzündeinrichtung zur Unterstützung des Wiederzündens bei einem Polaritätswechsel so ausgebildet sein, dass durch diese beim Polaritätswechsel ein Zündspannungsimpuls mit einer Pulshöhe < 1,5 kV bereitgestellt wird. Diese, in Bezug auf übliche Hochspannungsimpulse von > 6 kV, wie sie bei herkömmlichen Wechselstrom-Metallschutzgas-Schweißverfahren üblich sind, sehr niedrige Spannung ermöglicht kostengünstige Hardwaremaßnahmen zum Schutz der elektronischen Komponenten des Schweißstromkreises gegen Überspannung. Es hat sich herausgestellt, dass sich durch das erfindungsgemäße Wechselstrom-Metallschutzgas-Schweißverfahren die Wahrscheinlichkeit des Wiederzündens des Lichtbogens bei einem Polaritätswechsel von negativ gepoltem Schweißdraht zu positiv gepoltem Schweißdraht wesentlich erhöht, sodass die Spannungshöhe des jeweiligen Zündspannungsimpulses im Vergleich zu den herkömmlichen Verfahren wesentlich erniedrigt werden und trotzdem ein sicheres Wiederzünden des Lichtbogens bereitgestellt werden kann.

Sollte bei dem erfindungsgemäßen Verfahren in Ausnahmefällen trotz des Hin- und Herschaltens der Drahtpolarität ein Wiederzünden des Lichtbogens verhindert sein, kann zweckmäßigerweise vorgesehen sein, dass nach der Erfassung eines dann eintretenden Kurzschlusses aufgrund des vorwärts bewegten Schweißdrahtes ein spezifischer Schweißzyklus zur Aufhebung des Kurzschlusses durchgeführt wird. Dabei werden in vorgegebener Weise Schweißparameter gesteuert, um nach dem Auftreten einer Tropfenkurzschlussphase den Lichtbogen wieder zu zünden und zu einem vorgegebenen, störungsfreien Schweißzyklus zurückzukehren.

Zweckmäßigerweise kann das erfindungsgemäße Wechselstrom-Metallschutzgas-Schweißverfahren auch mit einem Gleichstrom-Schweißverfahren kombiniert werden, wobei eine Abfolge von AC-Schweißzyklen und einer Abfolge von DC-Schweißzyklen zeitlich nacheinander durchgeführt werden können. In dieser Hinsicht kann das erfindungsgemäße Schweißverfahren in beliebiger Weise mit bekannten Schweißverfahren kombiniert werden.

Um das Vorliegen eines Lichtbogens oder eines Kurzschlusses zu überwachen, können je nach Ausführungsform unterschiedliche Verfahren realisiert sein. Beispielsweise kann eine Erfassung der elektrischen Schweißenergie, des Schweißstroms und der Schweißspannung selbst oder auch die Erfassung der vom Schweißort emittierten elektromagnetischen Strahlung ausgeführt sein, um Informationen darüber zu erhalten, ob ein Lichtbogen bzw. ein Kurzschluss vorliegt. In einer Ausführungsform kann beispielsweise mittels einer auf den Schweißort gerichteten Kamera die von dort ausgehende elektromagnetische Strahlung im Sichtbaren und/oder Infraroten erfasst werden.

Vorteilhafterweise kann das erfindungsgemäße Schweißverfahren auch als Teilprozess eines Tandemschweißprozesses ausgeführt werden, bei welchem zwei kontinuierlich geförderte Drahtelektroden durch zwei separat gesteuerte Stromquellen mit elektrischer Energie versorgt werden, wobei an den beiden Drahtelektroden unterschiedliche Schweißprozesse ausgeführt werden können von welchen zumindest eines ein erfindungsgemäßes ist.

Vorrichtungsseitig wird das obenstehend angegebene Problem durch eine Schweißvorrichtung mit sekundär oder primär getakteter Schweißstromquelle gelöst, umfassend eine Gleichrichterschaltung sowie ein von dieser gespeister und von einer Steuerung gesteuerter Wechselrichter, der ausgangsseitig den Schweißprozess treibt, eine Wiederzündeinrichtung zur Erzeugung einer Zündhilfsspannung zur Unterstützung des Wiederzündens eines Lichtbogens bei einem Polaritätswechsel zwischen Schweißdraht und Werkstück, sowie einer Drahtvorschubeinrichtung, wobei die Schweißvorrichtung zur Durchführung eines erfindungsgemäßen Wechselstrom-Metallschutzgas-Schweißverfahren ausgebildet ist. Dabei kann die Wiederzündeinrichtung zur Erzeugung einer Zündhilfsspannung beispielsweise dadurch bereitgestellt sein, dass ein vorzugsweise elektronischer Schalter parallel zum Schweißprozess angeordnet ist und diesen während des Polaritätswechsels kurzzeitig kurzschließt, um eine am Ausgang des Wechselrichters angeschlossene und parallel zum Schweißprozess angeordnete Induktivität zu laden, sodass nach dem Öffnen des Schalters es zu einer Überspannung an der Wegstrecke Schweißdraht/Werkstück kommt, um den Lichtbogen zu zünden. In einer anderen Ausführungsform kann auch vorgesehen sein, dass die Wiederzündeinrichtung als Überlagerungszündvorrichtung ausgebildet ist, bei welcher primärseitig ein Zündimpuls erzeugt wird, welcher mittels eines Transformators sekundärseitig dem Ausgang des Wechselrichters überlagert wird.

Die Erfindung wird im Folgenden durch das Beschreiben einiger Ausführungsformen unter Bezugnahme auf die beiliegenden Figuren erläutert, wobei
- Figur 1: den prinzipiellen Aufbau einer Schweißstromquelle in einer ersten Ausführungsform zur Umsetzung des erfindungsgemäßen Schweißverfahrens,
- Figur 2: den prinzipiellen Aufbau einer Schweißstromquelle einer zweite Ausführungsform zur Umsetzung des erfindungsgemäßen Schweißverfahrens,
- Figur 3: einen beispielhaften, prinzipiellen zeitlichen Verlauf des Schweißstroms sowie der Schweißspannung für einen typischen, ungestörten Schweißzyklus beim erfindungsgemäßen Verfahrens,
- Figur 4: einen beispielhaften, prinzipiellen zeitlichen Verlauf von Schweißstrom und Schweißspannung bei einem gestörten Schweißzyklus unter Anwendung des erfindungsgemäßen Verfahrens,
- Figur 5: ein weiteres Beispiel für einen prinzipiellen zeitlichen Verlauf von Schweißstrom und Schweißspannung bei einem gestörten Schweißzyklus unter Anwendung des erfindungsgemäßen Verfahrens, und
- Figur 6: einen realen Zeitverlauf von Schweißspannung und Schweißstrom bei einem gestörten Schweißzyklus unter Anwendung des erfindungsgemäßen Verfahrens zeigt.

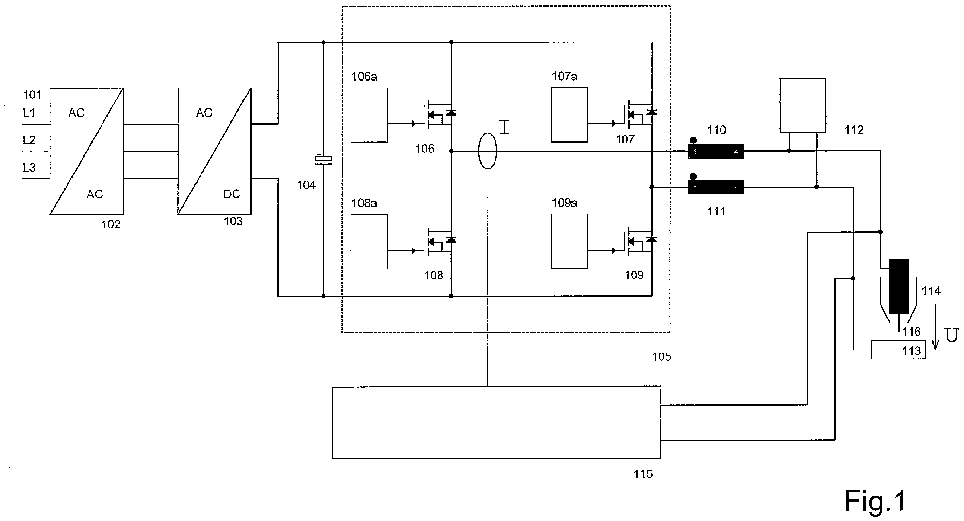

Figur 1 stellt den prinzipiellen Aufbau einer Schweißstromquelle zur Umsetzung des erfindungsgemäßen Schweißstrom-Metallschutzgas-Schweißverfahrens dar, wie es beispielsweise für das Schweißen von dünnen Blechen aus Aluminiumwerkstoffen verwendet werden kann. Die Schweißvorrichtung ist als sekundär getaktete Schweißstromquelle ausgebildet mit einem Drei-Phasen-Netzspannungsanschluss 101, einem Transformator 102 zur Transformation der Eingangsspannung, einem den Transformator 102 nachgeschalteten Gleichrichter 103, welcher in der beschriebenen Ausführungsform eine integrierte Leistungsanpassung aufweist und dessen Ausgang einen Zwischenkreiskondensator 104 speist. Dieser Kondensator 104 versorgt einen als Vollbrücke mit vier Schaltern 106 bis 109 gebildeten Wechselrichter. Die Schalter sind als MOSFET-Halbleiterschalter ausgebildet, deren Treiberstufen 106a bis 109a von der zentralen Steuer- und Regelungseinrichtung 115 angesteuert werden. An den Ausgang des Wechselrichters sind Induktivitäten 110, 111 in Reihe zum eigentlichen Schweißprozess angeschlossen, welcher das Werkstück 113 sowie den Brenner 114 umfasst, aus dem der kontinuierlich zum Werkstück transportierte Schweißdraht 116 austritt.

Ein vorzugsweise als elektronischer Schalter 112 ausgebildeter Schalter kann während eines Polaritätswechsels des Schweißdrahts 116 relativ zum Werkstück 113 geschlossen werden, sodass Strom durch die Induktivitäten 110, 111 fließt und diese lädt. Nach dem Öffnen des Schalters kommt es an der Wegstrecke Schweißdraht 116/Werkstück 113 zu einer Überspannung, welche zeitlich synchronisiert zu einer vorgegebenen Schweißspannung zum Zünden des Lichtbogens zwischen dem Schweißdraht 116 und dem Werkstück 113 führt. Dabei ist die Steuerung 115 zur Messung des Schweißstroms I und der Schweißspannung U eingerichtet.

Die Steuerung 115 steuert die Treiber 106a - 109a der Halbleiterschalter 106 bis 109 der Vollbrücke zur Realisierung eines Schweißzyklus an, bei welchem die Polarität zwischen Schweißdraht 116 und Werkstück 113 wechselt mit einem positiven Zyklusabschnitt mit mehreren, aufeinander folgenden Prozessphasen, bei welchen die Drahtelektrode positiv gepolt ist, sowie einen sich an den positiven Zyklusabschnitt nach einem Polaritätswechsel anschließenden negativen Zyklusabschnitt mit zwei Prozessphasen, bei welchen die Drahtelektrode negativ gepolt ist. Bei jedem Polwechsel steuert die Steuereinrichtung 115 darüber hinaus den Schalter 112 zur Erzeugung einer Spannungsüberhöhung um das Wiederzünden des Lichtbogens bei jedem Polaritätswechsel zu unterstützen.

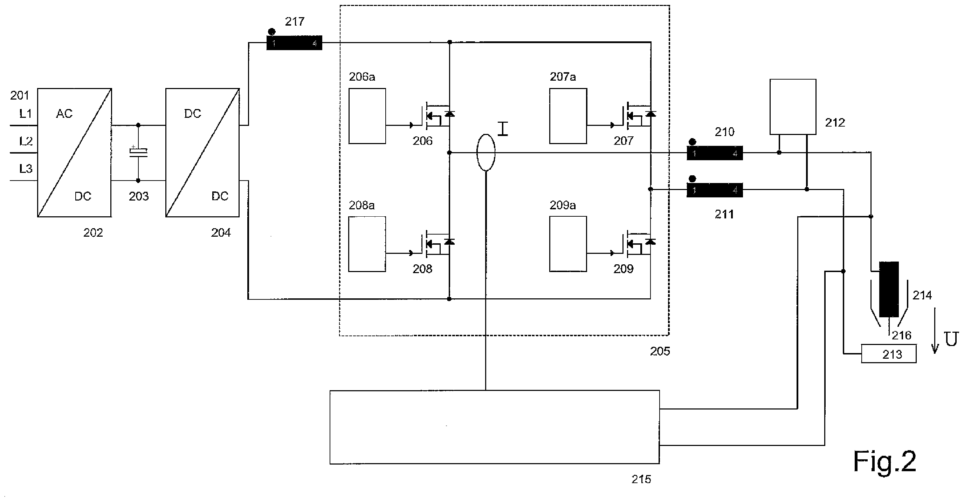

Figur 2 zeigt in einer vereinfachten Darstellung eine zweite Ausführungsform zur Durchführung des erfindungsgemäßen Wechselstrom-Metallschutzgas-Schweißverfahren mit einer primär getakteten Schweißstromquelle. Dabei wandelt ein Gleichrichter 202, welcher eine Leistungsanpassungsschaltung umfassen kann, die eingangsseitig anliegende Drei-Phasen-Netzspannung 201 in eine Zwischenkreisspannung des Zwischenkreiskondensators 203. Ein nachgeschalteter DC/DC-Wandler 204 sorgt für eine Potentialtrennung und eine Anpassung der Zwischenkreisspannung an die Schweißprozessspannung durch Regelung auf die Schweißprozessspannung und/oder den Schweißprozessstrom. Die Unterstützung des Wiederzündens des Lichtbogens bei einem Polaritätswechsel kann analog zu der in Figur 1 gezeigten Schweißvorrichtung durch Schalten eines Halbleiterschalters 212 während des Polaritätswechsels erfolgen zur Erzeugung eines Stromflusses durch die Induktivitäten 210, 211. Das sich anschließende Öffnen des Halbleiterschalters 212 erzeugt dann wiederum eine Überspannung an der Wegstrecke Schweißdraht 216/Werkstück 213 und unterstützt das Zünden des Lichtbogens. In einer auch in Figur 2 angedeuteten weiteren Ausführungsform kann auf die Induktivitäten 210, 211 und den Halbleiterschalter 212 verzichtet werden, stattdessen kann eine Induktivität 217 vorgesehen sein. Die besagte Überspannung zur Unterstützung des Wiederzündens des Lichtbogens wird hier über die Induktivität 217 durch entsprechendes Schalten der Transistoren 206 bis 209 der Vollbrücke erzeugt.

Die beiden in den Figuren 1 und 2 angegebenen Schweißvorrichtungen können zur Umsetzung eines Wechselstrom-Schweißzyklus oder -periode eingerichtet sein, wie es beispielsweise für das Wechselstrom-Aluminiumschweißen verwendet werden kann. Als Schutzgas wird in der Regel 100% Argon oder Argon mit einem Anteil von Helium verwendet.

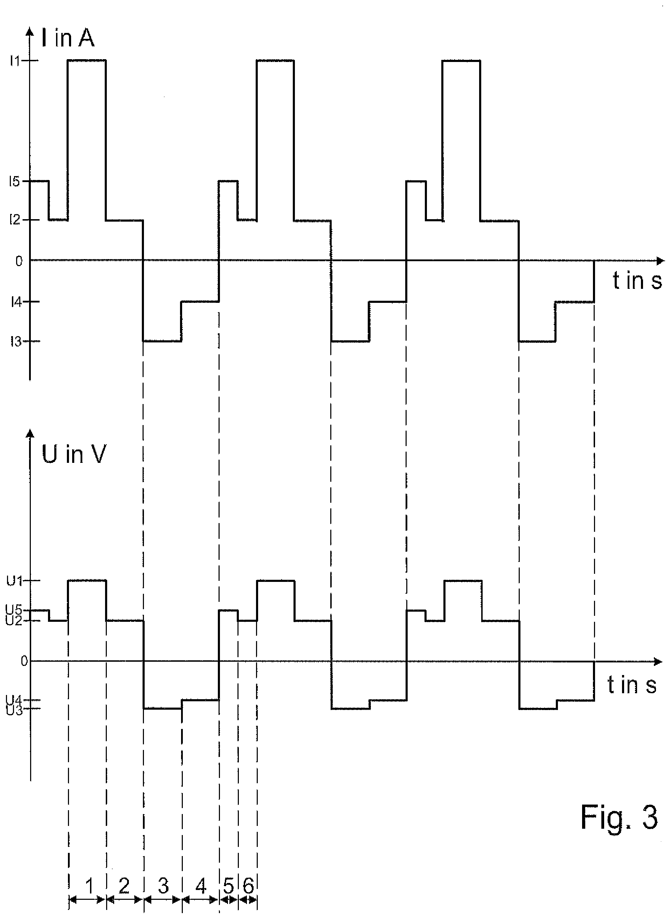

Figur 3 zeigt den prinzipiellen Zeitverlauf eines beispielhaft eingerichteten Schweißzyklus mit einem positiven Zyklusabschnitt, umfassend mehrere, aufeinander folgende Prozessphasen, bei welchen die Drahtelektrode 116, 216 gegenüber dem Werkstück 113, 213 positiv gepolt ist, sowie einen sich an den positiven Zyklusabschnitt nach einem Polaritätswechsel anschließenden negativen Zyklusabschnitt mit zwei Prozessphasen, bei welchen die Drahtelektrode negativ gepolt ist. Zur Vereinfachung und Klarheit der Darstellung sind die einzelnen Phasen in Bezug auf ihre Strom- bzw. Spannungswerte als ideale horizontale und im Übergang vertikale Linien dargestellt, untenstehend wird abschließend auch auf eine reale Situation eingegangen.

Die nachfolgende Beschreibung bezieht sich auf den erfindungsgemäßen Betrieb der in Figur 1 dargestellten Schweißvorrichtung, in entsprechender Weise kann die in Figur 2 angegebene Schweißvorrichtung zum Ausführen des erfindungsgemäßen Wechselstrom-Metallschutzgas-Schweißverfahrens ausgebildet sein.

Der in Figur 3 in einer Prinzipskizze dargestellte, beispielhafte und ungestörte Schweißzyklus umfasst einen positiven Zyklusabschnitt mit vier aufeinander folgenden Prozessphasen 5, 6, 1, 2, bei welchen die Drahtelektrode 116 gegenüber dem Werkstück 113 positiv gepolt ist sowie einen sich an diesen positiven Zyklusabschnitt nach einem Polaritätswechsel anschließenden negativen Zyklusabschnitt mit zwei Prozessphasen 3, 4, in welchen die Drahtelektrode relativ zum Werkstück negativ gepolt ist. Die in Figur 3 angegebene Phase 1 stellt bei dem beispielhaften Schweißzyklus die Pulsphase dar, bei welcher auf Strom oder Spannung geregelt wird. Die Pulsphase wird durch eine hohe Stromanstiegsgeschwindigkeit eingeleitet, wobei es bei einem Schweißstrom I1 aufgrund der Pinchkräfte zum Abschnüren eines Tropfens flüssigen Metalls an der Drahtspitze kommt, der in das Schmelzbad des Werkstücks übergeht. An die Pulsphase schließt sich die Phase 2 an, welche im Vergleich zur Pulsphase durch einen niedrigeren Strom I2 gekennzeichnet ist. In dieser Phase kommt es zum Anschmelzen flüssigen Metalls am freien Ende des in der vorliegenden Ausführungsform kontinuierlich zum Werkstück 113 geförderten Drahts.

Mit dem Abschluss der Phase 2 wird ein Polaritätswechsel zu einer negativ gepolten Drahtelektrode eingeleitet, wobei in der obenstehend angegebenen Art und Weise durch Ansteuern der Halbleiterschalter 106 bis 109 sowie 112 mit dem Polaritätswechsel eine Spannungsüberhöhung im Bereich von etwa - 900 V erzeugt wird zur Unterstützung des Wiederzündens des Lichtbogens. Zur Vereinfachung der Darstellung ist dieser Spannungspuls zum Zeitpunkt des Endes der Phase 2 bzw. des Beginns der Phase 3 nicht angegeben. Im angegebenen Fall zündet dieser Lichtbogen, was zu einem negativen Strom I3 führt, die negative Schweißspannung liegt in der Phase 3 bei dem Wert U3. In der sich daran anschließenden weiteren Phase 4 des negativen Zyklusabschnitts fällt die Schweißspannung und damit der Schweißstrom geringfügig. Je nach spezifischer Ausführungsform regelt die Steuerungseinrichtung 115 in den Phasen 3 und 4 des negativen Zyklusabschnitts den Schweißstrom und/oder die Schweißspannung. Am Ende der Phase 4 des Zyklusabschnitts wird ein Polaritätswechsel eingeleitet, wobei das Wiederzünden des Lichtbogens durch zum Polaritätswechsel phasenangepasstes Ansteuern der Halbleiterschalter und damit durch die Erzeugung eines Spannungsimpulses von etwa + 900 V unterstützt wird. Auch dieser Spannungsimpuls ist zur Klarheit der Darstellung in der Figur nicht angegeben. Soweit der Lichtbogen wie in Fig. 3 dargestellt in der Phase 5 nach dem Polaritätswechsel wieder zündet, verläuft der Prozess wie gewünscht ohne Unterbrechung. In Phase 5 wird auf ein höheres Strom-/bzw. Spannungsniveau geregelt, während in Phase 6 auf ein niedrigeres-/bzw. Spannungsniveau geregelt wird. An die Phase 6 schließt sich die obenstehend schon beschriebene Pulsphase als Phase 1 an, um den Tropfen abzuschnüren und in das Schweißbad überzuführen.

Soweit bei dem beschriebenen Schweißzyklus keine Störungen auftreten, verläuft der beispielhafte Schweißprozess zyklisch, d.h. periodisch, und ohne Unterbrechungen.

Es sei darauf hingewiesen, dass der beschriebene vorgegebene Schweißzyklus nur beispielhaft ist, es können ohne weiteres je nach spezifischer Anforderung des Schweißproblems weitere Prozessphasen in dem positiven oder negativen Zyklusabschnitt eingefügt werden oder auch einzelne Prozessphasen entfernt werden.

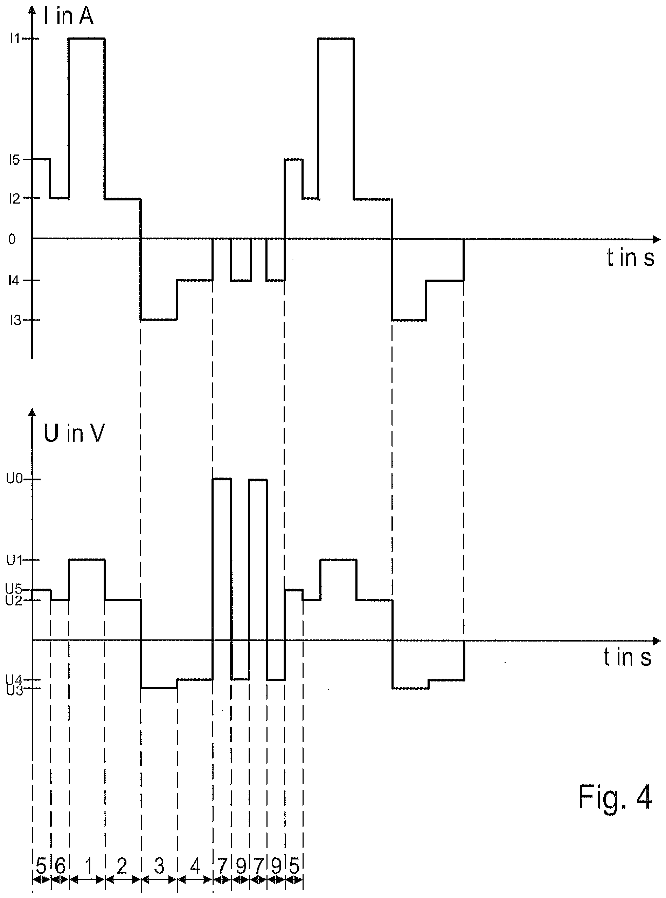

Figur 4 zeigt einen Schweißprozess mit dem in Figur 3 dargestellten Schweißzyklus, wobei nach dem störungsfreien Ablauf des ersten Zyklus der Lichtbogen nicht wieder zündet, nachdem die Polarität von minusgepoltem Schweißdraht zu positiv gepoltem Schweißdraht wechselt. In der Figur 4 ist dies im Verlauf der Schweißspannung daran zu erkennen, dass die Schweißspannung auf einen Wert U0 springt, welcher der Leerlaufspannung der Stromquelle entspricht. Aufgrund des fehlenden Lichtbogens fällt dann der Schweißstrom auf Null. Insofern hat die Zündspannung am Anfang der Phase 7 nicht ausgereicht, um den Lichtbogen zu zünden, wobei in der Darstellung wiederum wie in Figur 3 der von der Wiederzündeinrichtung durch das Öffnen des Halbleiterschalters 212 erzeugte Spannungspuls beim Polaritätswechsel nicht dargestellt ist. In der dargestellten Situation geht der Schweißstrom mit dem Polaritätswechsel direkt auf Null. In der Realität kann es jedoch auch sein, dass sich am Anfang der Phase 7 eine Glimmentladung ausbildet, welche einen kurzen geringen Stromfluss zulässt. In diesem Fall reicht die Ionisation der Strecke auch nicht aus, dass sich ein Lichtbogen bildet, sodass der Strom in diesem Fall schnell auf Null fällt und damit die Schweißspannung auf den Wert U0 der Leerlaufspannung ansteigt.

Das Nichtwiederzünden des Lichtbogens beim Polaritätswechsel von Plus nach Minus am Draht wird bei dem erfindungsgemäßen Verfahren durch die Erfassung des Schweißstromes und der Schweißspannung, siehe Figur 1, überwacht. Nachdem das Nichtwiederzünden des Lichtbogens erkannt wurde, wird der vorgegebene positive Zyklusabschnitt abgebrochen oder verkürzt und sofort ein Polaritätswechsel von einem plusgepolten Schweißdraht zu einem minusgepolten Schweißdraht eingeleitet, wobei wiederum die Wiederzündeinrichtung aktiviert ist. In dem in Figur 4 angegebenen Beispiel zündet ein Lichtbogen bei negativ gepolter Drahtelektrode, danach erfolgt wieder schnellstmöglich ein weiterer Polwechsel, der zu einer neuen Phase 7 führt, bei welcher der Lichtbogen nochmals nicht zündet und damit der Schweißstrom auf Null fällt. Die Schweißspannung steigt auf den Wert U0 der Leerlaufspannung.

Nach Ablauf der eingefügten Phase 7 stellt sich wiederum heraus, dass kein Lichtbogen bei positiv gepoltem Schweißdraht vorliegt, insofern wird eine nochmalige Umpolung mit Aktivierung der Wiederzündeinrichtung durchgeführt, die zu einer weiteren Lichtbogenphase 9 bei negativ gepolter Elektrode führt. Nach einer nochmaligen Umpolung mit gleichzeitiger Erzeugung eines positiven Spannungsimpulses zum Zünden des Lichtbogens brennt dieser tatsächlich stabil, die Schweißspannung liegt auf der Brennspannung U5, der Schweißstrom auf dem Wert I5.

Nach dem Wiederzünden des Lichtbogens bei positiv gepoltem Schweißdraht kann der Schweißprozess mit dem vorbestimmten, positiven Zyklusabschnitt gemäß Figur 3 weiterbetrieben werden.

Das erfindungsgemäße Hin- und Herschalten der Polarität führt letztlich dazu, dass die Strecke ohne große Verzögerung wieder bei positiv gepoltem Schweißdraht ionisiert wird. Dabei ist anzustreben, die Zeitdauern der Phase 7 und 9 möglichst kurz zu halten. In der Realität werden diese beschränkt auf die Zeitdauer, welche notwendig ist, um das Brennen bzw. Nichtbrennen eines Lichtbogens zu erkennen, darüber hinaus können diese Zeiträume nicht kleiner eingestellt werden, als es die elektrischen Gegebenheiten des Schweißstromkreises, insbesondere in Bezug auf sein ohmsches, induktives und kapazitives Verhalten, erlaubt.

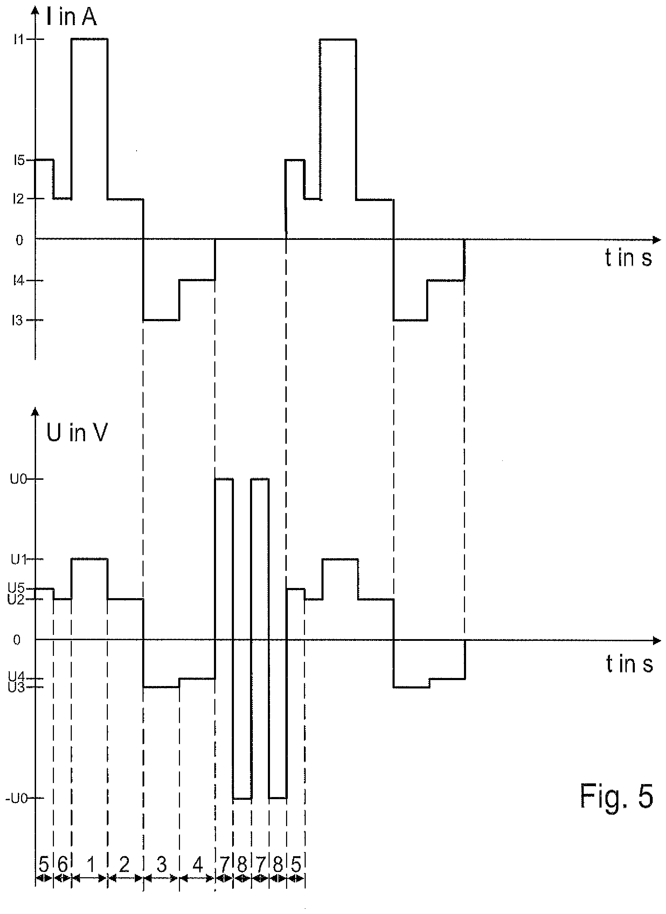

Figur 5 zeigt eine weitere Situation in Bezug auf den Verlauf des Schweißstroms und der Schweißspannung unter Anwendung des erfindungsgemäßen Wechselstrom-Metallschutzgas-Schweißverfahrens. Im Unterschied zu der Situation gemäß Figur 4 erfolgt nach dem Nichtwiederzünden des Lichtbogens bei positiv gepolter Drahtelektrode auch zweimal ein Nichtwiederzünden bei negativ gepolter Drahtelektrode, was durch den auf Null fallenden Schweißstrom bzw. die auf die negative Leerlaufspannung -U0 fallende Schweißspannung angezeigt wird.

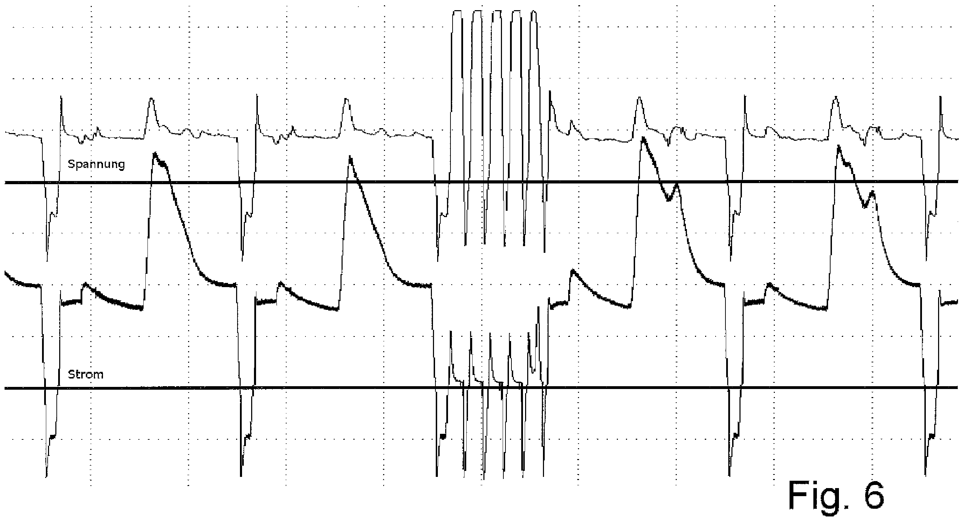

Figur 6 zeigt den zeitlichen Verlauf von Schweißspannung und Schweißstrom für einen realen Schweißprozess, ähnlich wie er in der Prinzipdarstellung der Figur 4 angegeben ist. Aufgrund der beschriebenen elektronischen und elektrischen Gegebenheiten gehen die einzelnen Prozessphasen des dargestellten Schweißprozesses real nicht sprunghaft ineinander über, sondern kontinuierlich. Wie aus der Darstellung hervorgeht, zündet der Lichtbogen bei einem ersten Polwechsel von negativ gepolter Elektrode zu positiv gepolter Drahtelektrode, auch der mit dem Spannungsimpuls erhöhte Strom zum Abschnüren des Tropfens ist gut zu erkennen. Nach Abschluss des positiven Zyklusabschnitts erfolgt eine Polumkehr zu negativ gepolter Elektrode mit brennendem Lichtbogen. An diese erste Schweißperiode schließt sich ein identischer zweiter Schweißzyklus störungsfrei an.

Der darauffolgende Polwechsel von negativ gepolter Drahtelektrode zu positiv gepolter Drahtelektrode führt jedoch nicht zu einem stabilen Lichtbogen bei positiv gepolter Drahtelektrode, die Schweißspannung steigt auf die Leerlaufspannung, der Schweißstrom ist Null. Gemäß dem Verfahren der vorliegenden Erfindung wird dann der positive Zyklusabschnitt unterbrochen bzw. verkürzt, es folgt nun ein Hin-und Herschalten der Polarität unter phasenangepasster Aktivierung der Wiederzündeinrichtung. In dem in Figur 6 angegebenen Beispiel erfolgt ein stabiles Wiederzünden des Lichtbogens bei positiv gepolter Drahtelektrode erst bei dem sechsten Versuch, danach kann der vorgegebene Schweißzyklus weiterbetrieben werden. In der Figur sind 2 weitere störungsfreie Schweißperioden erkennbar.

### Bezugszeichenliste

- 1 - 9: Prozessphase
- 101: Drei-Phasen-Netzspannung
- 102: Drei-Phasen-Transformator
- 103: Gleichrichter
- 104: Zwischenkreiskondensator
- 105: Wechselrichter
- 106 - 109: Halbleitertransistor mit Diode
- 106a - 109a: Treiberstufe
- 110: Drossel
- 111: Drossel
- 112: Halbleiterschalter
- 113: Werkstück
- 114: Schweißbrenner mit Drahtzuführung
- 115: Steuerungseinrichtung
- 116: Schweißdraht, Drahtelektrode
- 201: Drei-Phasen-Netzspannung
- 202: Gleichrichter
- 203: Zwischenkreiskondensator
- 204: DC/DC-Wandler
- 205: Wechselrichter
- 206 - 209: Halbleitertransistor mit Diode
- 206a - 209a: Treiberstufe
- 210: Drossel
- 211: Drossel
- 212: Halbleiterschalter
- 213: Werkstück
- 214: Schweißbrenner und Drahtzuführung
- 215: Steuerungseinrichtung
- 216: Schweißdraht, Drahtelektrode
- 217: Drossel
- I: Schweißstromwert
- U: Schweißspannungswert

## Patentansprüche

1. Wechselstrom-Metallschutzgas-Schweißverfahren mit kontinuierlich zugeführtem Schweißdraht (116, 216) und vorgegebenem Schweißzyklus bei welchem die Polarität zwischen Schweißdraht (116, 216) und Werkstück (113, 213) wechselt und eine Wiederzündeinrichtung zur Erzeugung einer Zündhilfsspannung zur Unterstützung des Wiederzündens des unter Schutzgasabdeckung brennenden Lichtbogens nach einem Polaritätswechsel, wobei das Vorliegen eines Lichtbogens oder eines Kurzschlusses überwacht wird, **dadurch gekennzeichnet, dass** nach dem Erkennen des Nichtwiederzündens des Lichtbogens bei einem Polaritätswechsel von negativ gepoltem Schweißdraht zu positiv gepoltem Schweißdraht (116, 216) der vorgegebene Schweißzyklus unterbrochen wird und die Polarität solange hin- und hergeschaltet wird, bis der Lichtbogen wieder bei einem Polaritätswechsel von negativ gepoltem Schweißdraht zu positiv gepoltem Schweißdraht zündet, wobei mittels der Wiederzündeinrichtung zu jedem Polaritätswechsel ein Zündspannungsimpuls mit einer Pulshöhe < 1,5 KV bereitgestellt wird zum Wiederzünden des Lichtbogens bei einem Polaritätswechsel von negativ gepoltem Schweißdraht zu positiv gepoltem Schweißdraht (116, 216).

2. Wechselstrom-Metallschutzgas-Schweißverfahren nach Anspruch 1, **dadurch gekennzeichnet,**
**dass** das Hin- und Herschalten der Polarität zwischen Schweißdraht (116, 216) und Werkstück (113, 213) schnellstmöglich erfolgt.

3. Wechselstrom-Metallschutzgas-Schweißverfahren nach einem der Ansprüche 1, oder 2, **gekennzeichnet durch** einen Schweißzyklus umfassend wenigstens einen positiven Zyklusabschnitt mit mehreren, aufeinanderfolgenden Prozessphasen (5, 6, 1, 2), bei welchen die Drahtelektrode (116, 216) positiv gepolt ist, sowie einen sich an den positiven Zyklusabschnitt nach einem Polaritätswechsel anschließenden negativen Zyklusabschnitt mit zumindest einer Prozessphase (3, 4), bei welcher die Drahtelektrode (116, 216) negativ gepolt ist.

4. Wechselstrom-Metallschutzgas-Schweißverfahren nach Anspruch 3, **dadurch gekennzeichnet**,
**das**s nach dem Erkennen des Nichtwiederzündens des Lichtbogens bei einem Polaritätswechsel von negativ gepoltem Schweißdraht (116, 216) zu positiv gepoltem Schweißdraht der aktuelle positive Zyklusabschnitt abgebrochen und in den Schweißzyklus eine Prozessphase eingefügt wird, in welcher ein Polaritätswechsel von positiv gepoltem Schweißdraht zu negativ gepoltem Schweißdraht (116, 216) durchgeführt wird, und daran anschließend die Polarität des Schweißdrahtes wiederum gewechselt wird, wobei dann ein positiver Zyklusabschnitt gestartet und der vorgegebene Schweißzyklus wieder abläuft, wenn ein Lichtbogen bei positiv gepolter Drahtelektrode gezündet hat.

5. Wechselstrom-Metallschutzgas-Schweißverfahren nach einem der Ansprüche 1 bis 4, **dadurch gekennzeichnet, dass** nach dem Wiederzünden des Lichtbogens beim Polaritätswechsel von negativ gepoltem Schweißdraht (116, 216) zu positiv gepoltem Schweißdraht ein vorgegebener, positiver Zyklusabschnitt abläuft.

6. Wechselstrom-Metallschutzgas-Schweißverfahren nach einem der Ansprüche 1 bis 5, **dadurch gekennzeichnet, dass** mittels der Wiederzündeinrichtung zu jedem Polaritätswechsel im Schweißstromkreis ein Zündspannungsimpuls mit einer Pulshöhe kleiner 900 V bereitgestellt wird.

7. Wechselstrom-Metallschutzgas-Schweißverfahren nach einem der Ansprüche 1 bis 6, **dadurch gekennzeichnet, dass** nach der Erfassung eines Kurzschlusses ein spezifischer Schweißzyklus zur Aufhebung des Kurzschlusses durchgeführt wird.

8. Wechselstrom-Metallschutzgas-Schweißverfahren nach einem der Ansprüche 1 bis 7, **dadurch gekennzeichnet, dass** der vorgegebene Schweißzyklus einen Schweißzyklusabschnitt mit positiv gepoltem Schweißdraht (116, 216) umfasst, innerhalb dessen eine Tropfenablösung von dem abschmelzenden Schweißdraht erfolgt, sowie einen Schweißzyklusabschnitt mit negativ gepoltem Schweißdraht (116, 216), wobei nach dem Hin- und Herschalten der Polarität und dem darauffolgenden Wiederzünden des Lichtbogens bei positiv gepoltem Schweißdraht der Schweißzyklusabschnitt mit positiv gepoltem Schweißdraht und Tropfenablösung gestartet wird, sodass eine Aussetzung einer zyklischen Tropfenablösung vermieden wird.

9. Wechselstrom-Metallschutzgas-Schweißverfahren nach einem der Ansprüche 1 bis 8, **dadurch gekennzeichnet, dass** das Verfahren mit einem DC-Schweißverfahren kombiniert wird, wobei eine Abfolge von AC-Schweißzyklen und eine Abfolge von DC-Schweißzyklen zeitlich nacheinander durchgeführt werden.

10. Wechselstrom-Metallschutzgas-Schweißverfahren nach einem der Ansprüche 1 bis 9, **dadurch gekennzeichnet, dass** das Vorliegen eines Lichtbogens oder eines Kurzschlusses durch die Erfassung der elektrischen Schweißenergie überwacht wird.

11. Wechselstrom-Metallschutzgas-Schweißverfahren nach einem der Ansprüche 1 bis 9, **dadurch gekennzeichnet, dass** das Vorliegen eines Lichtbogens oder eines Kurzschlusses durch die Erfassung der vom Schweißort emittierten elektromagnetischen Strahlung überwacht wird.

12. Wechselstrom-Metallschutzgas-Schweißverfahren nach einem der Ansprüche 1 bis 11, **dadurch gekennzeichnet, dass** das Schweißverfahren als Teil eines Tandem-Schweißprozesses ausgeführt wird.

13. Schweißvorrichtung mit sekundär oder primär getakteter Schweißstromquelle umfassend eine Gleichrichterschaltung (103, 202) sowie ein von dieser gespeister und von einer Steuerung gesteuerter Wechselrichter (105, 205), der ausgangsseitig den Schweißprozess treibt, einer Wiederzündeinrichtung zur Erzeugung einer Zündhilfsspannung zur Unterstützung des Wiederzündens eines Lichtbogens bei einem Polaritätswechsel zwischen Schweißdraht (116, 216) und Werkstück (113, 213), sowie einer Drahtvorschubeinrichtung zum kontinuierlichen Zuführen des Schweißdrahtes, wobei die Schweißvorrichtung mit der Steuerung ausgebildet ist zur Ausführung eines Schweißverfahrens mit kontinuierlich zugeführtem Schweißdraht (116, 216) und vorgegebenem Schweißzyklus bei welchem die Polarität zwischen Schweißdraht (116, 216) und Werkstück (113, 213) wechselt, wobei das Vorliegen eines Lichtbogens oder eines Kurzschlusses überwacht wird, ferner umfassend die Schritte: Nach dem Erkennen des Nichtwiederzündens des Lichtbogens bei einem Polaritätswechsel von negativ gepoltem Schweißdraht zu positiv gepoltem Schweißdraht (116, 216), unterbrechen des vorgegebenen Schweißzyklus und Hin- und Herschalten der Polarität solange, bis der Lichtbogen wieder bei einem Polaritätswechsel von negativ gepoltem Schweißdraht zu positiv gepoltem Schweißdraht zündet, wobei mittels der Wiederzündeinrichtung zu jedem Polaritätswechsel ein Zündspannungsimpuls mit einer Pulshöhe < 1,5 KV bereitgestellt wird zum Wiederzünden des Lichtbogens bei einem Polaritätswechsel von negativ gepoltem Schweißdraht zu positiv gepoltem Schweißdraht (116, 216) .

## Claims

1. AC gas shielding metal welding method with continually fed welding wire (116, 216) and a predefined welding cycle for which the polarity between the welding wire (116, 216) and the workpiece (113, 213) changes and a re-ignition device for generating an ignition auxiliary tension for supporting the re-ignition of the electric arc burning under inert gas shielding after a polarity change, wherein the presence of an electric arc or of a short circuit is monitored, **characterized in that**, after the non re-ignition of the electric arc has been detected during a polarity change from a welding wire with a negative polarity to a welding wire with a positive polarity (116, 216), the predefined welding cycle is interrupted and the polarity is switched back and forth as long as the electric arc re-ignites during a polarity change from a welding wire with a negative polarity to a welding wire with a positive polarity, wherein an ignition voltage pulse with a pulse height < 1,5 KV is made available by means of the re-ignition device for each polarity change for re-igniting the electric arc for a polarity change from a welding wire with a negative polarity to a welding wire with a positive polarity (116, 216).

2. AC gas shielding metal welding method according to claim 1, **characterized in that** the switching back and forth of the polarity between the welding wire (116, 216) and the workpiece (113, 213) takes place as quickly as possible.

3. AC gas shielding metal welding method according to one of the claims 1 or 2, **characterized by** a welding cycle that comprises at least one positive cycle portion with several consecutive process phases (5, 6, 1, 2) for which the wire electrode (116, 216) has a positive polarity as well as a negative cycle portion following the positive cycle portion after a polarity change with at least one process phase (3, 4) for which the wire electrode (116, 216) has a negative polarity.

4. AC gas shielding metal welding method according to claim 3, **characterized in that**, after the non re-ignition of the electric arc has been detected during a polarity change from a welding wire with a negative polarity (116, 216) to a welding wire with a positive polarity, the present positive cycle portion is interrupted and a process phase is inserted into the welding cycle in which a polarity change from a welding wire with a positive polarity to a welding wire with a negative polarity (116, 216) is carried out and thereafter the polarity of the welding wire is changed again, wherein a positive cycle portion is then started and the predefined welding cycle is performed when an electric arc is ignited with a wire electrode with a positive polarity.

5. AC gas shielding metal welding method according to one of the claims 1 to 4, **characterized in that** a predefined positive cycle portion is performed after the electric arc is ignited during a polarity change from a welding wire with a negative polarity (116, 216) to a welding wire with a positive polarity.

6. AC gas shielding metal welding method according to one of the claims 1 to 5, **characterized in that** an ignition voltage pulse with a pulse height lower than 900 V is made available in the welding circuit for each polarity change by means of the re-ignition device.

7. AC gas shielding metal welding method according to one of the claims 1 to 6, **characterized in that**, after a short circuit has been detected, a specific welding cycle is performed for removing the short circuit.

8. AC gas shielding metal welding method according to one of the claims 1 to 7, **characterized in that** the predefined welding cycle comprises a welding cycle portion with a welding wire with a positive polarity (116, 216) within which a release of droplets of the melting welding wire takes place as well as a welding cycle portion with a welding wire with a negative polarity (116, 216), wherein, after the polarity has been switched back and forth and the re-ignition of the electric arc has subsequently taken place with a welding wire with a positive polarity, the welding cycle portion with a welding wire with a positive polarity and the release of droplets is started so that an interruption of a cyclic release of droplets is prevented.

9. AC gas shielding metal welding method according to one of the claims 1 to 8, **characterized in that** the method is combined with a CC welding method, wherein a sequence of AC welding cycles and a sequence of CC welding cycles are performed in a time sequence the one after the other.

10. AC gas shielding metal welding method according to one of the claims 1 to 9, **characterized in that** the presence of an electric arc or of a short circuit is monitored after the electric welding energy has been detected.

11. AC gas shielding metal welding method according to one of the claims 1 to 9, **characterized in that** the presence of an electric arc or of a short circuit is monitored after the electromagnetic radiation emitted by the welding location has been detected.

12. AC gas shielding metal welding method according to one of the claims 1 to 11, **characterized in that** the welding method is carried out as part of a tandem welding process.

13. Welding device with a secondary or primary pulsed welding power source comprising a rectifier circuit (103, 202) as well as a rectifier (105, 205) fed therefrom and controlled by a control that drives the welding process on the output side, a re-ignition device for generating an ignition auxiliary tension for supporting the re-ignition of the electric arc burning under inert gas shielding after a polarity change between the welding wire (116, 216) and the workpiece (113, 213) as well as a wire feed device for the continual feed of the welding wire, wherein the welding device is designed with a control for carrying out a welding method with continually fed welding wire (116, 216) and a predefined welding cycle for which the polarity between the welding wire (116, 216) and the workpiece (113, 213) changes, wherein the presence of an electric arc or of a short circuit is monitored, further comprising the steps: after the non re-ignition of the electric arc has been detected during a polarity change from a welding wire with a negative polarity to a welding wire with a positive polarity (116, 216), interruption of the predefined welding cycle and switching back and forth of the polarity as long as the electric arc re-ignites during a polarity change from a welding wire with a negative polarity to a welding wire with a positive polarity, wherein an ignition voltage pulse with a pulse height < 1,5 KV is made available by means of the re-ignition device for each polarity change for re-igniting the electric arc for a polarity change from a welding wire with a negative polarity to a welding wire with a positive polarity (116, 216).

## Revendications

1. Procédé de soudure à courant alternatif avec gaz protecteur de métal avec fil de soudure (116, 216) alimenté en continu et cycle de soudure prédéfini pour lequel la polarité change entre le fil de soudure (116, 216) et la pièce (113, 213) et un dispositif de réallumage pour produire une tension d'assistance à l'amorçage pour soutenir le réallumage de l'arc de lumière allumé sous une protection de gaz de protection après un changement de polarité, cependant que la présence d'un arc de lumière ou d'un court-circuit est surveillée, **caractérisé en ce que**, après que le non réallumage de l'arc de lumière ait été reconnu lors d'un changement de polarité du fil de soudure à polarisation négative au fil de soudure à polarisation positive (116, 26) le cycle de soudure prédéfini est interrompu et la polarité est commutée en va-et-vient jusqu'à ce que l'arc de lumière s'allume à nouveau lors d'un changement de polarité du fil de soudure à polarisation négative au fil de soudure à polarisation positive, cependant qu'à chaque changement de polarité une impulsion de tension d'allumage d'une hauteur d'impulsion < 1,5 KV est mise à disposition au moyen du dispositif de réallumage jusqu'au réallumage de l'arc de lumière pour un changement de polarité du fil de soudure à polarisation négative au fil de soudure à polarisation positive (116, 216).

2. Procédé de soudure à courant alternatif avec gaz protecteur de métal selon la revendication 1, **caractérisé en ce que** la commutation en va-et-vient de la polarité se fait le plus vite possible entre le fil de soudure (116, 216) et la pièce (113, 213).

3. Procédé de soudure à courant alternatif avec gaz protecteur de métal selon l'une des revendications 1 ou 2, **caractérisé par** un cycle de soudure qui comprend au moins une section de cycle positive avec plusieurs phases de processus successives (5, 6, 1, 2) pour lesquelles le fil-électrode (116, 216) est polarisé positif ainsi qu'une section de cycle négative qui suit la section de cycle positive après un changement de polarité avec au moins une phase de processus (3, 4) pour laquelle le fil-électrode (116, 216) est polarisé négatif.

4. Procédé de soudure à courant alternatif avec gaz protecteur de métal selon la revendication 3, **caractérisé en ce que** après que le non réallumage de l'arc de lumière ait été reconnu lors d'un changement de polarité du fil de soudure à polarisation négative au fil de soudure à polarisation positive (116, 26) la section de cycle positive actuelle est interrompue et il est inséré une phase de processus dans le cycle de soudure and laquelle un changement de polarité du fil de soudure à polarisation positive au fil de soudure à polarisation négative (116, 216) est effectué et à la suite de laquelle la polarité du fil de soudure est changée à nouveau, cependant qu'une section de cycle positive est démarrée et le cycle de soudure prédéfini se déroule à nouveau lorsqu'un arc de lumière est allumé avec le fil-électrode à polarisation positive.

5. Procédé de soudure à courant alternatif avec gaz protecteur de métal selon l'une des revendications 1 à 4, **caractérisé en ce qu'**après le réallumage de l'arc de lumière lors du changement de polarité du fil de soudure à polarisation négative (116, 216) au fil de soudure à polarisation positive une section de cycle positive prédéfinie se déroule.

6. Procédé de soudure à courant alternatif avec gaz protecteur de métal selon l'une des revendications 1 à 5, **caractérisé en ce qu'**une impulsion de tension d'allumage d'une hauteur d'impulsion inférieure à 900 V est mise à disposition dans le circuit de soudure au moyen du dispositif de réallumage à chaque changement de polarité.

7. Procédé de soudure à courant alternatif avec gaz protecteur de métal selon l'une des revendications 1 à 6, **caractérisé en ce qu'**après avoir détecté un court-circuit un cycle de soudure spécifique est exécuté pour supprimer le court-circuit.

8. Procédé de soudure à courant alternatif avec gaz protecteur de métal selon l'une des revendications 1 à 7, **caractérisé en ce que** le cycle de soudure prédéfini comprend une section de cycle de soudure avec un fil de soudure à polarisation positive (116, 216) à l'intérieur de laquelle un déclenchement de gouttelettes du fil de soudure fondant se fait, ainsi qu'une section de cycle de soudure avec un fil de soudure à polarisation négative (116, 216), cependant qu'après que la polarité ait commuté en va-et-vient et après le réallumage subséquent de l'arc de lumière, le fil de soudure étant à polarisation positive, la section de cycle de soudure avec le fil de soudure à polarisation positive et le déclenchement de gouttelettes est démarré si bien qu'une suspension d'un déclenchement cyclique de gouttelettes est évitée.

9. Procédé de soudure à courant alternatif avec gaz protecteur de métal selon l'une des revendications 1 à 8, **caractérisé en ce que** le procédé est combiné avec un procédé de soudure à courant continu, une séquence de cycles de soudure à courant alternatif et une séquence de cycles de soudure à courant continu étant exécutées l'une après l'autre dans le temps.

10. Procédé de soudure à courant alternatif avec gaz protecteur de métal selon l'une des revendications 1 à 9, **caractérisé en ce que** la présence d'un arc de lumière ou d'un court-circuit est surveillée par la détection de l'énergie de soudure électrique.

11. Procédé de soudure à courant alternatif avec gaz protecteur de métal selon l'une des revendications 1 à 9, **caractérisé en ce que** la présence d'un arc de lumière ou d'un court-circuit est surveillée par la détection du rayonnement électromagnétique émis par le lieu de soudure.

12. Procédé de soudure à courant alternatif avec gaz protecteur de métal selon l'une des revendications 1 à 11, **caractérisé en ce que** le procédé de soudure est exécuté comme une partie d'un processus de soudage tandem.

13. Dispositif de soudure avec une source de courant de soudure à cadence secondaire ou primaire qui comprend un circuit redresseur (103, 202) ainsi qu'un onduleur (105, 205) alimenté par celui-ci et commandé par une commande, qui entraîne côté sortie le processus de soudure, un dispositif de réallumage pour produire une tension d'assistance à l'amorçage pour soutenir le réallumage d'un arc de lumière lors d'un changement de polarité entre le fil de soudure (116, 216) et la pièce (113, 213) ainsi qu'un dispositif d'avancée du fil pour l'alimentation en continu du fil de soudure, cependant que le dispositif de soudure est configuré avec la commande pour exécuter un procédé de soudure avec un fil de soudure alimenté en continu (116, 216) et un cycle de soudure prédéfini pour lequel la polarité entre le fil de soudure (116, 216) et la pièce (113, 213) change, cependant que la présence d'un arc de lumière ou d'un court-circuit est surveillée, qui comprend de plus les étapes : après que le non réallumage de l'arc de lumière ait été reconnu lors d'un changement de polarité du fil de soudure à polarisation négative au fil de soudure à polarisation positive (116, 26), interruption du cycle de soudure prédéfini et commutation en va-et-vient de la polarité jusqu'à ce que l'arc de lumière s'allume à nouveau lors d'un changement de polarité du fil de soudure à polarisation négative au fil de soudure à polarisation positive, cependant qu'à chaque changement de polarité une impulsion de tension d'allumage d'une hauteur d'impulsion < 1,5 KV est mise à disposition au moyen du dispositif de réallumage jusqu'au réallumage de l'arc de lumière lors d'un changement de polarité du fil de soudure à polarisation négative au fil de soudure à polarisation positive (116, 216)î
